# EUROPEAN PATENT APPLICATION

(11) **EP 2 031 678 A1**
(43) Date of publication of application: **04.03.2009**
(21) Application number: 07744440.4
(22) Date of filing: 24.05.2007
(51) Int. Cl.: H01M 4/86, B01J 23/42, B01J 35/10, H01M 4/90, H01M 4/92

(54) **METHOD FOR EVALUATING PERFORMANCE OF ELECTRODE CATALYST FOR BATTERY, METHOD FOR EXPLORING ELECTRODE CATALYST FOR BATTERY, ELECTRODE CATALYST FOR BATTERY, AND FUEL BATTERY USING THE ELECTRODE CATALYST**

(30) Priority: 24.05.2006 JP 2006144305
(71) Applicant: TOYOTA JIDOSHA KABUSHIKI KAISHA, Aichi-ken, 471-8571 (JP)
(72) Inventor: IISAKA, Hirofumi, Toyota-shi, Aichi 471-8571 (JP)
(74) Representative: Kuhnen & Wacker
(86) International application number: PCT/JP2007/061029
(87) International publication number: WO 2007/136140

(57) **Abstract**

A method for evaluating the performance of an electrode catalyst for a fuel cell having a catalyst metal supported on a conductive support, wherein a voltammogram area/catalyst specific surface area of the electrode catalyst is used as an index for the performance evaluation, and the performance is evaluated as good when the voltammogram area/catalyst specific surface area is 1.0×10⁻⁴ (mV·A·g/m²) or more. The object is to develop a technique for accurately evaluating the performance of an electrode catalyst for a fuel cell, as well as to search for an electrode catalyst for a fuel cell having excellent performance, and further, to specifically obtain a novel electrode catalyst for a fuel cell having excellent catalyst activity which was searched for using this technique.

## Description

### Technical Field

The present invention relates to a method for evaluating performance of an electrode catalyst for a cell, a search method, an electrode catalyst for a fuel cell which has a small overpotential and excellent power generation performance found by said search method, and a fuel cell having this electrode catalyst.

### Background Art

Fuel cells are gaining attention as a clean power generation system having scarcely any adverse impact on the global environment due to the fact that the product of the cell reaction is principally water. As an example, a polymer electrolyte fuel cell, which comprises a proton-conducting solid polymer electrolyte membrane with a pair of electrodes provided on each side of the membrane, obtains electromotive force by supplying hydrogen gas to one of the electrodes (fuel electrode: anode) as fuel gas, and supplying oxygen gas or air to the other electrode (air electrode: cathode) as an oxidant.

Polymer electrolyte fuel cells have dramatically improved cell performance as a result of: (1) the development of polymer electrolyte membranes having high ion conductivity; and (2) the use of a catalyst-supporting carbon coated with a polymer electrolyte membrane and a homogenous or heterogeneous ion-exchange resin (polymer electrolyte) for the constituent material of the electrode catalyst layer, specifically, the fact so-called reaction sites in the catalyst layer can be rendered in three-dimensions. Further, in addition to obtaining such high cell performance, since the cell can easily be made smaller and lighter, polymer electrolyte fuel cells hold promise for practical use as a power source in mobile vehicles such as electric automobiles and in small cogeneration systems and the like.

Usually, a gas diffusion electrode used in a polymer electrolyte fuel cell is composed of a catalyst layer containing the above-described carbon-supported catalyst coated with an ion-exchange resin and a gas diffusion layer which feeds a reaction gas to the catalyst layer and collects electrons. Voids composed of fine pores formed among the secondary particles or the tertiary particles of the carbon serving as the constituent material are present in the catalyst layer. These voids function as a diffusion flow path for the reaction gas. A precious metal catalyst such as platinum and platinum alloy, which are stable in the ion-exchange resin, is normally used as the catalyst.

Conventionally, a catalyst of a precious metal such as platinum or platinum alloy on supported carbon black has been used as cathode and anode catalysts of the electrode catalysts in a polymer electrolyte fuel cell. Carbon black-supported platinum is typically prepared by charging sodium bisulfite into a chloroplatinic acid solution, then reacting the resulting mixture with hydrogen peroxide solution, supporting the formed platinum colloid on carbon black, then washing and optionally heat treating. The electrodes of a polymer electrolyte fuel cell are fabricated by dispersing carbon black-supported platinum in a polymer electrolyte solution to prepare an ink, coating this ink on a gas diffusion substrate such as carbon paper and drying. An electrolyte membrane-electrode assembly (MEA) is assembled by sandwiching a polymer electrolyte membrane between two these electrodes and hot-pressing.

Improvement of catalyst activity and power generation performance is the greatest technical challenge for polymer electrolyte fuel cells. Many publications discuss this, including, for example, JP Patent Publication (Kokai) No. 2005-135817 A. This publication discloses for providing an electrode catalyst for a fuel cell in which the used amount of a precious metal, especially platinum, in a solid polymer fuel cell is reduced, an electrode catalyst for a fuel cell having a platinum catalyst supported on an amorphous carbon powder support, wherein the amorphous carbon powder has an average particle size of 15 to 80 nm and a BET specific surface area of 1500 m²/g or more, the total pore volume of pores having a diameter less than 2 nm is 0.8 cm³/g or more, the total pore volume of pores having a diameter less than 2 nm to the whole pore volume is 60% or more, and the amount of the supported catalyst is 5 to 70 mass% of all the particles.

However, in JP Patent Publication (Kokai) No. 2005-135817 A, because the electrode catalyst is defined in terms of average particle size, specific surface area, pore volume and catalyst mass of the support, the fact that overpotential cannot be defined is a problem. It is considered that overpotential cannot be defmed because the properties are defined in terms of the support properties (specific surface area etc.) rather than in terms of the catalyst properties, and there is no definition in terms of experimental values based on electrochemistry.

Overpotential has been found to be largely dependent on the oxide film on the surface of the catalyst. Therefore, to define overpotential, it is necessary to define the catalyst properties and values correlated to experimental values based on electrochemistry.

In a polymer electrolyte fuel cell, a hydrogen-containing gas (fuel gas) is used as the anode reaction gas, and an oxygen-containing gas such as air is used as the cathode reaction gas. In this case, the following electrode reactions represented by formulae (1) and (2) are proceeding respectively at the anode and at the cathode, whereby electromotive force is generated by the overall cell reaction represented by formula (3) proceeding.

H² → 2H⁺ + 2e⁻ (1)

(1/2)O₂ + 2H⁺ + 2e⁻ → H₂O (2)

H² + (1/2)O₂ → H₂O (3)

However, in a conventional polymer electrolyte fuel cell, because the activation overpotential of the oxygen reduction reaction represented by formula (2) is much greater than the activation overpotential of the hydrogen oxidation reaction represented by formula (1), there is the problem that a high cell power output cannot be obtained.

JP Patent Publication (Kokai) No. 2002-15744 A described that to obtain a solid polymer fuel cell that has excellent cathode polarization properties and provides a high cell power output, wherein the polarization properties at the cathode are improved by incorporating in the cathode catalyst layer a metal complex having a predetermined amount of iron or chromium in addition to a metal catalyst selected from the group consisting of platinum and platinum alloy. Specifically, this publication describes a solid polymer fuel cell which comprises an anode, a cathode and a polymer electrolyte membrane arranged between the anode and the cathode, characterized in that the cathode comprises a gas diffusion layer and a catalyst layer arranged between the gas diffusion layer and the polymer electrolyte membrane, and the catalyst layer contains a precious metal catalyst selected from the group consisting of platinum and platinum alloy and a metal complex containing iron or chromium, wherein the metal complex is composed of 1 to 40 mol% of the combined quantity of the metal complex and the precious metal catalyst. This metal complex having iron or chromium incorporated in the cathode catalyst layer can effectively reduce the activation overpotential of the cathode oxygen reduction reaction represented by formula (2), whereby the polarization properties of the cathode are improved, which enables a high cell power output to be obtained.

### Disclosure of the Invention

The utilization of electrode catalysts and fuel cells, especially polymer electrolyte fuel cells, using an electrode catalyst, as a power source for automobiles and stationary use is being tested. Although improvement in cell performance is also important, there is a strong demand for maintaining a desired power generation performance over a long period of time. Further, because expensive precious metals are used, those performance demands are especially strong. Since the oxygen reduction overpotential at the oxygen reduction cathode is particularly large, the dissolution or reprecipitation of platinum in a high potential environment is the main factor in reducing the efficiency of a fuel cell.

However, as exemplified by the above-described JP Patent Publication (Kokai) Nos. 2005-135817 A and 2002-15744 A, existing research goes no further than attempting to improve catalyst activity. Evaluation of catalyst activity is not being adequately carried out. While the performance evaluation disclosed in J. of The Electrochemical Society, 146 (10) 3750-3756 (1999) is of great interest in terms of knowing the performance of an electrode catalyst for a fuel cell, this document is insufficient from the standpoint of evaluating in advance which metals and alloys will in the future be effective as electrode catalysts for a fuel cell to aid in catalyst development.

Accordingly, an object of the present invention is to develop a technique for accurately evaluating the performance of an electrode catalyst for a fuel cell, as well as to search for an electrode catalyst for a fuel cell having excellent performance, and further, to specifically obtain a novel electrode catalyst for a fuel cell having excellent catalyst activity which was searched for using this technique.

Focusing on the fact that overpotential is largely dependent on the oxide film on the surface of the metal catalyst, the present inventors believed that to define overpotential, it is necessary to define catalyst properties and the parameters relating to experimental values based on electrochemistry. As a result, the present inventors arrived at the present invention by expressing a degree of formation of the oxide film with normalized specific parameters and using these parameters as an index for evaluating the performance of an electrode catalyst for a fuel cell.

Specifically, a first aspect of the present invention is the invention of a method for evaluating performance of an electrode catalyst for a fuel cell having a catalyst metal supported on a conductive support, characterized by that a voltammogram area/catalyst specific surface area of the electrode catalyst is used as an index for the performance evaluation, and the performance is evaluated as good when the voltammogram area/catalyst specific surface area is 1.0×10⁻⁴ (mV·A·g/m²) or more. The first aspect of the present invention is also the invention of a method for evaluating performance of an electrode catalyst for a fuel cell having a catalyst metal supported on a conductive support, characterized in that a voltammogram area/catalyst specific surface area of the catalyst metal is used as an index for the performance evaluation, and the performance is evaluated as good when the voltammogram area/catalyst specific surface area is 1.0×10⁻⁴ (mV·A·g/m²) or more. Here, the voltammogram area of the electrode catalyst is determined by voltammetry.

As a binder used when measuring the voltammogram area, various polymer materials can be widely used. Among these, the use of carboxymethyl cellulose (CMC) or polyvinylidene fluoride (PVDF) is especially preferred, as the change in reduction current, and especially the change in oxygen reduction current, is vividly stands out and can be clearly picked up compared with when the polymer electrolyte Nafion^{®} is used, which allows differences in the formation of the oxide film to be clearly determined.

A second aspect of the present invention is the invention in which the above-described index is used for searching for a novel and high-performance electrode catalyst for a fuel cell. Specifically, the second aspect of the present invention is the invention of a method for searching for an electrode catalyst for a fuel cell having a catalyst metal supported on a conductive support, characterized in that a voltammogram area/catalyst specific surface area of the electrode catalyst is used as an index for the search, and a result is evaluated as good when the voltammogram area/catalyst specific surface area is 1.0×10⁻⁴ (mV·A·g/m²) or more. The second aspect of the present invention is also the invention of a method for searching for an electrode catalyst for a fuel cell having a catalyst metal supported on a conductive support, in which a voltammogram area/catalyst specific surface area of the catalyst metal is used as an index for the search, a result in and that evaluated as good when the voltammogram area/catalyst specific surface area is 1.0×10⁻⁴ (mV·A·g/m²) or more.

As a binder used when measuring the voltammogram area, carboxymethyl cellulose (CMC) or polyvinylidene fluoride (PVDF) is especially preferred is as described above, because the change in reduction current, and especially the change in oxygen reduction current, vividly stands out and can be clearly picked up.

A third aspect of the present invention is the invention of an electrode catalyst specifically searched for by the above-described method for searching for an electrode catalyst for a fuel cell. Specifically, the third aspect of the present invention is the invention of an electrode catalyst for a fuel cell having a catalyst metal supported on a conductive support, characterized by having a voltammogram area/catalyst specific surface area of 1.0×10⁻⁴ (mV·A·g/m²) or more. The third aspect of the present invention is also the invention of an electrode catalyst for a fuel cell having a catalyst metal supported on a conductive support, characterized by comprising a catalyst metal which has a voltammogram area/catalyst specific surface area of 1.0×10⁻⁴ (mV·A·g/m²) or more.

As the binder used when measuring the voltammogram area, that carboxymethyl cellulose (CMC) or polyvinylidene fluoride (PVDF) is especially preferred is as described above, because the change in reduction current, and especially the change in oxygen reduction current, vividly stands out and can be clearly picked up.

A fourth aspect of the present invention is a fuel cell using the above-described electrode catalyst. Specifically, the fuel cell according to the present invention is a solid polymer fuel cell comprising an anode, a cathode and a polymer electrolyte membrane arranged between the anode and the cathode, characterized in that an electrode catalyst has a catalyst metal supported on a conductive support, and a voltammogram area/catalyst specific surface area of the electrode catalyst is 1.0×10⁻⁴ (mV·A·g/m²) or more. Alternatively, the fourth aspect of the present invention is characterized by comprising a catalyst metal supported on a conductive support, which has a voltammogram area/catalyst specific surface area of 1.0×10⁻⁴ (mV·A·g/m²) or more.

The fuel cell according to the present invention is constituted from a flat unit cell and two separators provided on either side of the unit cell. By using the above-described electrode catalyst, in this fuel cell the electrode reactions represented by formulae (1) and (2) proceed respectively at the anode and at the cathode, whereby electromotive force is generated by the overall cell reaction represented by the formula (3) proceeding.

As a result, the fuel cell according to the present invention has a small overpotential and excellent power generation performance from using an electrode catalyst having a high catalyst activity.

According to the present invention, the voltammogram area of an electrode catalyst obtained from voltammetry is normalized by dividing by the catalyst specific surface area, to be used as an index for performance evaluation and for searching for novel catalysts, to thereby allow accurate evaluation and searching of electrode catalysts for a fuel cell having high performance. As a result, the work and time required for fuel cell performance evaluation and searching is dramatically shortened.

### Brief Description of the Drawings

Figure 1 schematically illustrates the appearance of platinum atoms on the surface of platinum particles oxidized by oxygen molecules formed from water molecules;
Figure 2 illustrates an example of a voltammogram of the platinum catalyst;
Figure 3 illustrates the relationship between the current-voltage curve and theoretical electromotive force and overpotential;
Figure 4 shows the voltammetric results of the reduction current of platinum using, as a binder, Nafion^{®}, CMC and PVDF;
Figure 5 shows the oxygen reduction current of platinum at 800 mV using, as a binder, Nafion^{®}, CMC and PVDF;
Figure 6 shows the voltammetric results of the oxygen reduction current of platinum using, as a binder, Nafion^{®}, CMC and PVDF; and
Figure 7 illustrates the correlation between the voltammogram area/catalyst specific surface area and overpotential.

### Best Mode for Carrying Out the Invention

An embodiment of the present invention will now be described in more detail.

The voltammetry used in the present invention will now be described. Voltammetry is a method in which current is measured while varying voltage to plot a voltage-current curve (voltammogram), from which the nature of the subject substance is determined by electrolysis potential and the amount of the subject substance is determined by the current at that time. Voltammetry refers to a method of measuring current (amperes) by adjusting potential (volts). Potential-adjusted voltammetry is carried out to measure the flowing current by varying the electrode potential over time. The observed current consists of faradaic current based on electron acceptance from electrolysis, and capacitive current (capacity current) based on the change in capacitance over time due to adsorption of ions, molecules and the like at the electrode interface. For the indicator electrode, various microelectrodes (of mercury, platinum, gold, glassy carbon and the like) are used. Voltammetry is widely employed in the analysis of electrode reactions, research into redox systems, analysis of a substance to be electrolyzed and the like and operational methods known in the art are used. For example, the potential of the indicator electrode is set to a specific value to cause a subject substance to deposit by electrolysis over a certain time. This substance concentrates on the electrode. Then, the electrode potential is increased in the reverse direction. Current is measured when the deposited substance redissolves.

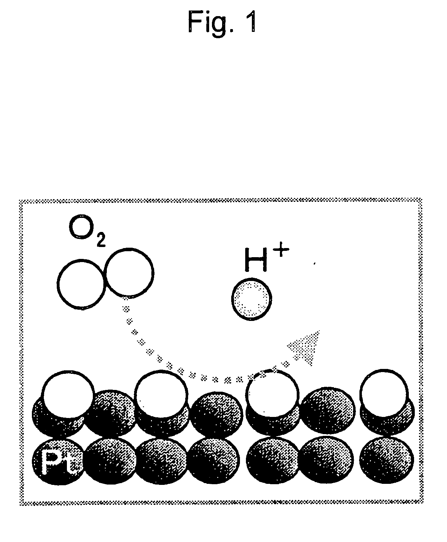

Figure 1 schematically illustrates the appearance of platinum atoms on the surface of platinum particles oxidized by oxygen molecules formed from water molecules.

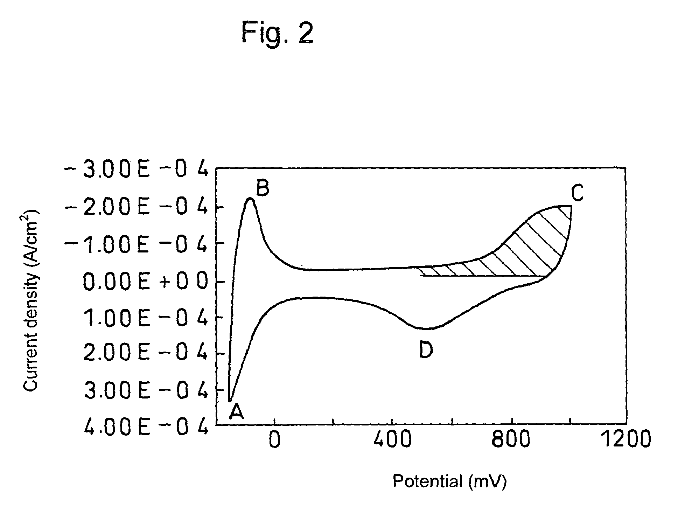

Figure 2 illustrates an example of a voltammogram (potential scanning rate: 0.31 V/s) of a platinum catalyst in 0.5 mol/L H₂SO₄. In the figure, there are a large number of current peaks. The electrode reactions occurring at each of these current peaks are thought to be one of the followings based on the peak current value or factors influencing the peak current value, such as variation in potential scanning rate, effects of stirring and change in pH.
A: Formation of adsorbed hydrogen

   H⁺ + e⁻ ⇒ H_{ad}
B: Ionization of adsorbed hydrogen

   H_{ad} ⇒ H⁺ + e⁻
C: Formation of platinum film

   Pt + H₂O ⇒ PtO + 2H⁺ + 2e⁻
D: Reduction of platinum film

   PtO + 2H⁺ + 2e⁻ ⇒ Pt + H₂O

With conventional evaluation methods, the voltammogram area cannot be highlighted, so differences in the oxide film are unclear. In the present invention, the method for evaluating the voltammogram area has been improved, wherein the voltammogram area is normalized by dividing the voltammogram area by catalyst specific surface area. Further, by using a CMC or PVDF binder for voltammetry binder, the change in voltammogram area can be highlighted, which allows differences in the oxide film to be clarified. The use of CMC is especially preferable for highlighting oxygen reduction current.

Carbon materials known in the art may be used for the conductive support used in the electrode catalyst for a fuel cell according to the present invention. Especially preferred examples include carbon blacks such as channel black, furnace black, thermal black and acetylene black, and activated carbon.

In the case of using the electrode catalyst according to the present invention in a polymer electrolyte fuel cell, either a fluorine electrolyte or a hydrocarbon electrolyte can be used as the polymer electrolyte. Fluorine polymer electrolytes incorporate an electrolyte group, such as a sulfonic acid group or a carboxylic acid group, into a fluoropolymer compound. The fluorine polymer electrolyte used in the fuel cell according to the present invention is a polymer containing an electrolyte group, such as a sulfonic acid group, as a substituent in a fluorocarbon skeleton or a hydrofluorocarbon skeleton, and the molecule may have an ether group, chlorine, a carboxylic acid group, a phosphoric acid group and an aromatic ring. Usually, a polymer is used which has perfluorocarbon as a main chain skeleton and sulfonic acid groups via a spacer such as perfluoroether or an aromatic ring. Specific examples known in the art include "Nafion^{®}" manufactured by DuPont and "Aciplex-S" manufactured by Asahi Kasei Corporation. The hydrocarbon polymer electrolyte used in the fuel cell according to the present invention has a hydrocarbon moiety in any of the molecular chains constituting the polymer compound, and contains an electrolyte group. Here, examples of the electrolyte group include a sulfonic acid group and a carboxylic acid group.

### Examples

The present invention will now be described in more detail with the following example.

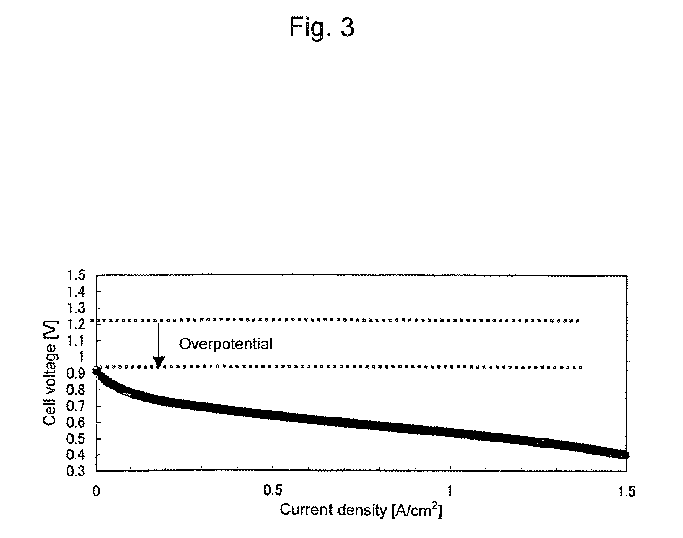

In Figure 3, a current-voltage curve was plotted with a gas flow of 12 mil at the anode and 6 mil at the cathode, a cell temperature of 80°C, an anode bubbler temperature of 58°C, a cathode bubbler temperature of 48°C and a platinum catalyst weight of 0.35 mg/cm². The cell voltage of 0.9 V at a zero current density was 0.3 V less than the theoretical electromotive force of 1.2 V, and this value is the overpotential.

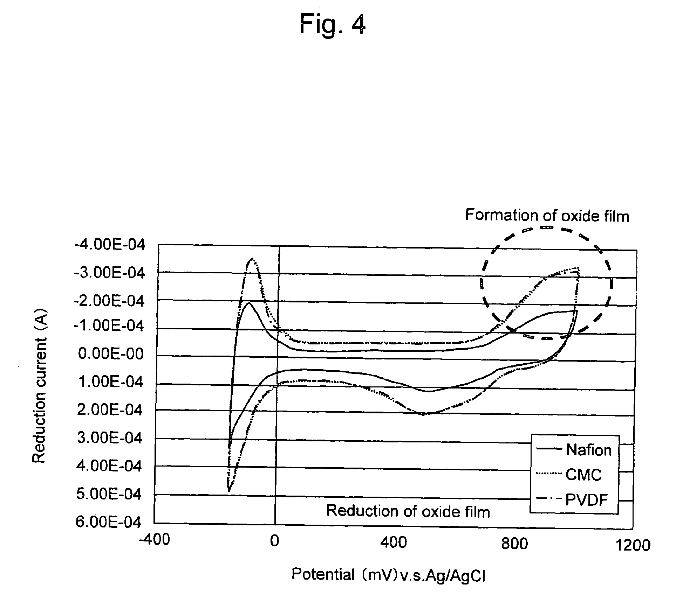

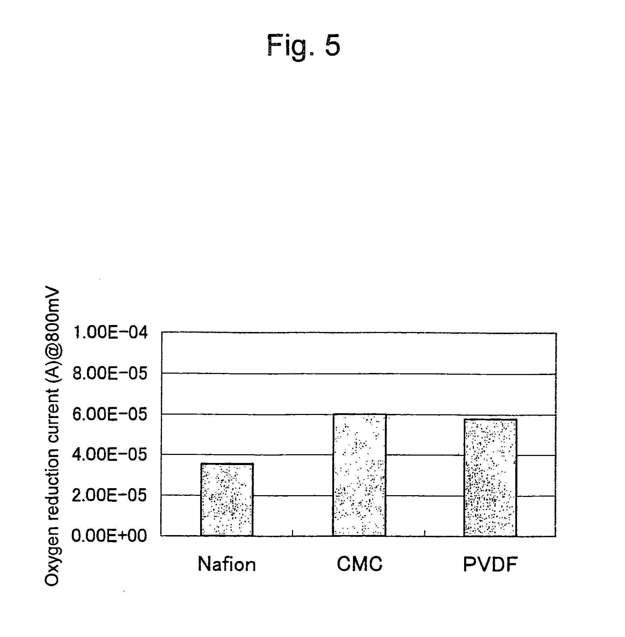

Figure 4 shows the voltammetric results of the reduction current of platinum carried out by CV-N₂, and using, as a binder, Nafion^{®}, CMC and PVDF. Further, Figure 5 compares the oxygen reduction current of platinum at 800 mV using, as a binder, Nafion^{®}, CMC and PVDF. It can be seen that if CMC or PVDF is used as the binder, the change in reduction current is large.

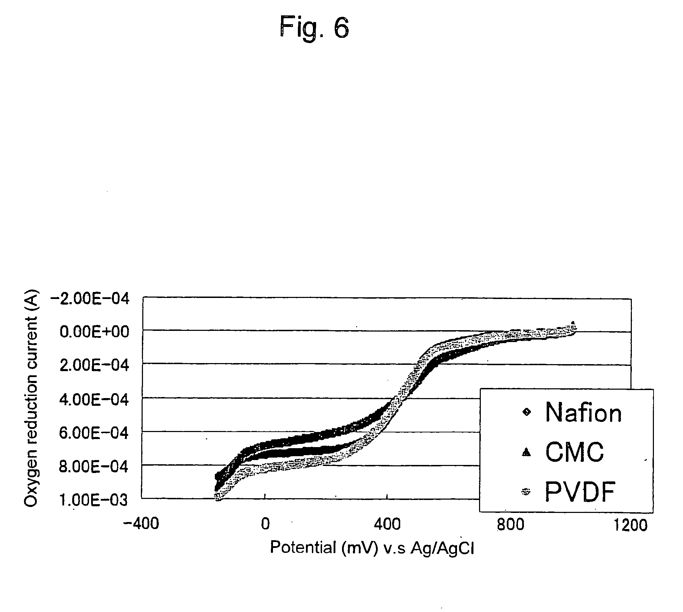

Similarly, Figure 6 shows the voltammetric results of the oxygen reduction current of platinum carried out by O₂-LSV at 1,600 rpm, and using, as a binder, Nafion^{®}, CMC and PVDF when applying each potential in steps of 2 minutes each. It can be seen that if PVDF is used as the binder, the change in oxygen reduction current is large.

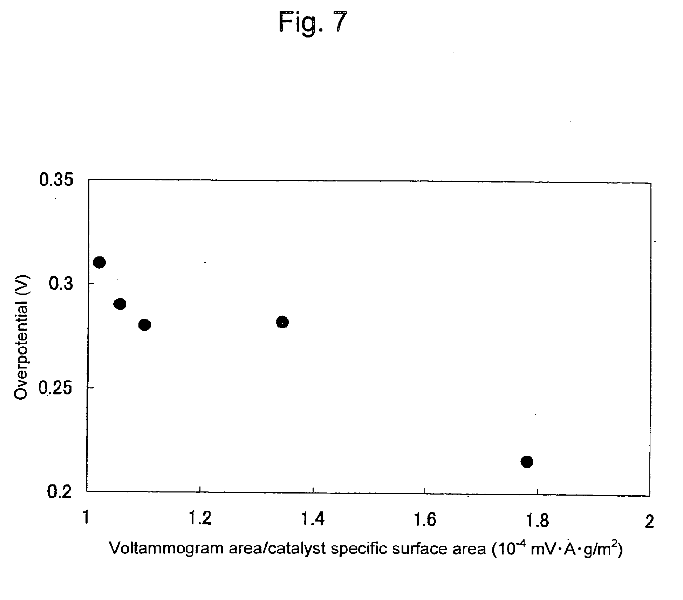

Figure 7 illustrates the correlation between the voltammogram area/catalyst specific surface area and overpotential. The drop in cell voltage from the theoretical electromotive force is plotted on the vertical axis as overpotential and the numerical value calculated by the present inventors by dividing the voltammogram area obtained from voltammetric analysis by the catalyst specific surface area is plotted on the horizontal axis.

Fuel cells have suffered from the problem that the surface of the air electrode catalyst (e.g. platinum catalyst) oxidizes, which reduces the cell voltage (increase in overpotential). However, in the above example, a clear negative correlation can be seen between the voltammogram area/catalyst specific surface area and overpotential. From the results of Figure 7, it was learned that if the voltammogram area/catalyst specific surface area is set to 1.0×10⁻⁴ mV·A·g/m² or more, the overpotential of a fuel cell catalyst using Nafion^{®} can be reduced to 0.4 V or less.

### Industrial Applicability

According to the present invention, the voltammogram area of an electrode catalyst obtained from voltammetry is normalized by dividing by the catalyst specific surface area, to be used as an index for performance evaluation and for searching for novel catalysts, to thereby allow accurate evaluation and searching of electrode catalysts for a fuel cell having high performance. As a result, the work and time required for fuel cell performance evaluation and searching is dramatically shortened, which will contribute to the practical use and spread of fuel cells.

## Claims

1. A method for evaluating performance of an electrode catalyst for a fuel cell having a catalyst metal supported on a conductive support, **characterized in that** a voltammogram area/catalyst specific surface area of the electrode catalyst is used as an index for the performance evaluation, and the performance is evaluated as good when the voltammogram area/catalyst specific surface area is 1.0×10⁻⁴ (mV·A·g/m²) or more.

2. A method for evaluating performance of an electrode catalyst for a fuel cell having a catalyst metal supported on a conductive support, **characterized in that** a voltammogram area/catalyst specific surface area of the catalyst metal is used as an index for the performance evaluation, and the performance is evaluated as good when the voltammogram area/catalyst specific surface area is 1.0×10⁻⁴ (mV·A·g/m²) or more.

3. The method for evaluating performance of an electrode catalyst for a fuel cell according to claim 1 or 2, **characterized in that** carboxymethyl cellulose (CMC) or polyvinylidene fluoride (PVDF) is used as a binder when the voltammogram area is measured.

4. A method for searching for an electrode catalyst for a fuel cell having a catalyst metal supported on a conductive support, **characterized in that** a voltammogram area/catalyst specific surface area of the electrode catalyst is used as an index for the search, and a result is evaluated as good when the voltammogram area/catalyst specific surface area is 1.0×10⁻⁴ (mV·A·g/m²) or more.

5. A method for searching for an electrode catalyst for a fuel cell having a catalyst metal supported on a conductive support, **characterized in that** a voltammogram area/catalyst specific surface area of the catalyst metal is used as an index for the search, and a result is evaluated as good when the voltammogram area/catalyst specific surface area is 1.0×10⁻⁴ (mV·A·g/m²) or more.

6. The method for searching for an electrode catalyst for a fuel cell according to claim 4 or 5, **characterized in that** carboxymethyl cellulose (CMC) or polyvinylidene fluoride (PVDF) is used as a binder when the voltammogram area is measured.

7. An electrode catalyst for a fuel cell having a catalyst metal supported on a conductive support, **characterized by** having a voltammogram area/catalyst specific surface area of 1.0×10⁻⁴ (mV·A·g/m²) or more.

8. An electrode catalyst for a fuel cell having a catalyst metal supported on a conductive support, **characterized by** comprising a catalyst metal which has a voltammogram area/catalyst specific surface area of 1.0×10⁻⁴ (mV·A·g/m²) or more.

9. The electrode catalyst for a fuel cell according to claim 7 or 8, **characterized in that** carboxymethyl cellulose (CMC) or polyvinylidene fluoride (PVDF) is used as a binder when the voltammogram area is measured.

10. A fuel cell using the electrode catalyst according to any of claims 7 to 9.
